(19) Europäisches Patentamt
European Patent Office
Office européen des brevets

(11) Publication number : 0 469 389 B1

# (12) EUROPEAN PATENT SPECIFICATION

(45) Date of publication of patent specification : 27.04.94 Bulletin 94/17

(51) Int. Cl.[5] : C08G 18/08, C08G 18/28, C08G 18/46, C08G 18/80

(21) Application number : 91111928.7

(22) Date of filing : 17.07.91

## (54) Two-component aqueous polyurethane dispersions.

The file contains technical information submitted after the application was filed and not included in this specification

(30) Priority : 30.07.90 US 559805
22.01.91 US 644180
22.01.91 US 643615

(43) Date of publication of application : 05.02.92 Bulletin 92/06

(45) Publication of the grant of the patent : 27.04.94 Bulletin 94/17

(84) Designated Contracting States : AT BE CH DE ES FR GB IT LI NL SE

(56) References cited :
EP-A- 0 148 970
EP-A- 0 206 059
EP-A- 0 312 890
EP-A- 0 427 028
FR-A- 2 317 317

(73) Proprietor : MILES INC.
One Mellon Center 500 Grant St.
Pittsburgh, PA 15219-2502 (US)

(72) Inventor : Potter, Terry A.
83 East Benjamin Drive
New Martinsville, W.Va. 26155 (US)
Inventor : Jacobs, Patricia B.
188 Kent Drive, Upper St. Clair
Pittsburgh, PA 15241 (US)
Inventor : Markusch, Peter H.
111 Lynbrook Drive
McMurray, PA 15317 (US)
Inventor : Rosthauser, James W.
1430 Sunset Lane
Glen Dale, W. Va. 26038 (US)

(74) Representative : Weber, Gerhard, Dr. et al
c/o BAYER AG, Konzernverwaltung RP,
Patente Konzern
D-51368 Leverkusen (DE)

EP 0 469 389 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to two-component aqueous polyurethane dispersions which may be cured at ambient temperature and to the coatings prepared therefrom which have excellent hardness, flexibility and solvent resistance. In a second embodiment the present invention relates to coatings which also possess improved gloss.

Aqueous polyurethane dispersions and their use for the production of coatings are known. The dispersions may be cured at ambient temperature by evaporation of water and coalescence of the individual polyurethane particles. These aqueous-based products have been developed in an effort to reduce the amount of organic solvents which are present in corresponding solvent-based coating compositions. Even though the prior art dispersions possess many valuable properties, it has not been possible to obtain coatings which possess all of the properties of coatings obtained from solvent-based coating compositions, especially hardness and solvent resistance.

The known aqueous polyurethane dispersions do not possess the amount of crosslinking which is required to obtain these properties. One method of increasing the amount of crosslinking is to blend the polyurethane dispersion with a water dispersible, blocked polyisocyanate as disclosed in U.S. Patent 4,098,933. U.S. Patent 4,608,413 discloses the use of water dispersible, blocked polyisocyanates in combination with polyurethanes which contain hydroxyl groups as crosslinking sites. While the systems disclosed in these patents make it possible to obtain improved hardness and crosslinking, they suffer from the disadvantage that the coating compositions must be heated to high temperatures in order to release the blocking agent and initiate crosslinking. Obviously, these coating compositions are not suitable for application to substrates which cannot withstand the unblocking temperature of the polyisocyanate.

Accordingly, it is an object of the present invention to provide aqueous polyurethane dispersions which may be cured at ambient temperature to provide coatings with excellent hardness, flexibility and solvent resistance. It is an additional object of the present invention to obtain coatings having a high gloss from these aqueous polyurethane dispersions without having to add large amounts of organic solvents.

The first object may be achieved in accordance with the present invention as set forth hereinafter by the use of two-component coating compositions wherein one component is an aqueously dispersed, hydroxy functional polyurethane and the second component is a water dispersible, unblocked polyisocyanate. The additional object may be achieved by adding certain polyols to the aqueous polyurethane dispersion.

Previously, it was known from U.S. Patent 4,663,377 to modify aqueous polyurethane adhesive dispersions by the addition of water dispersible, unblocked polyisocyanates. German Offenlegungsschrift 3,728,140 teaches that an improvement in the heat activation temperature of the adhesive dispersions may be obtained by chain extending the polyurethane with a monoamine containing at least one hydroxyl group. Neither of these references suggest the use of the aqueous dispersions as coating compositions. In fact, it is surprising that the two-component dispersions according to the present invention can be used to prepare acceptable coatings. It would be expected that a portion of the isocyanate groups of the water dispersible polyisocyanate would react with the water present in the aqueous dispersions instead of the hydroxyl groups of the polyurethane because the reactivity of isocyanate groups with water and hydroxyl groups is similar. Because the isocyanate/water reaction produces carbon dioxide as a by-product, it would also be expected that some of the carbon dioxide would be trapped in the form of bubbles within the resulting coating rendering it unacceptable for further use. However, it has surprisingly been found that it is possible to obtain bubble-free coatings in accordance with the present invention.

It was also known from FR-A-23 17 317 to modify polyester resins with hydrophilic isocyanates to render them water-compatible, however, the modified polyhydroxyl compounds thus prepared have a total content of urethane and urea groups which is far below 9 % by weight. These modified polyhydroxyl compounds may be used in combination with blocked polyisocyanates for the manufacture of stoving lacquers as to bee seen from examples 13 and 14.

## SUMMARY OF THE INVENTION

The present invention relates to a two-component, aqueous polyurethane coating composition which may be cured at ambient temperature and which contains

I) a first component based on an aqueously dispersed polyurethane wherein the polyurethane has

a) an average hydroxy functionality of at least 1.8,

b) a total content of urethane and urea groups, calculated as -NH-CO- (molecular weight = 43), of 9 to 20% by weight, based on the weight of the polyurethane,

c) 0 to 200 milliequivalents of chemically incorporated anionic groups per 100 g of polyurethane and

d) 0 to 25% by weight, based on the weight of the polyurethane, of ethylene oxide units incorporated within terminal and/or lateral polyether chains,

wherein components c) and d) are present in an amount which is sufficient to maintain the polyurethane stably dispersed in water,

II) a second component based on a water dispersible polyisocyanate wherein the polyisocyanate has

a) an isocyanate content of 2 to 30% by weight, based on the weight of the polyisocyanate,

b) an average functionality of at least 1.8,

c) 0 to 200 milliequivalents of chemically incorporated anionic groups per 100 g of polyisocyanate and

d) 0 to 25% by weight, based on the weight of the polyurethane, of ethylene oxide units incorporated within terminal and/or lateral polyether chains,

wherein components components c) and d) are present in an amount which is sufficient to maintain the polyisocyanate stably dispersed in water, and

components I and II are present in an amount sufficient to provide an equivalent ratio of isocyanate groups to hydroxyl groups of 0.8:1 to 6:1, and

III) optionally up to 20% by weight, based on the weight of components I and II, of a polyol which has a molecular weight of 62 to 1000 and may contain ether groups.

The present invention is also directed to the coatings prepared from these coating compositions.

The hydroxy functional polyurethanes used in conjunction with the water dispersible polyisocyanates in accordance with the present invention have an average hydroxy functionality of at least 1.8, preferably 1.8 to 8, more preferably 2 to 6 and most preferably 2.5 to 6; a total content of urethane and urea groups of 9 to 20% by weight, preferably about 10 to 17% by weight; and an average hydroxy equivalent weight (which may be calculated by an end group analysis) of about 100 to 5000, preferably 500 to 4000 and more preferably 1000 to 3000.

The hydroxy functional polyurethanes are based on the reaction product of organic polyisocyanates with a high molecular weight polyols, optionally low molecular weight, isocyanate-reactive compounds, and at least one of isocyanate-reactive compounds which contain anionic or potential anionic groups and isocyanate-reactive compounds containing nonionic hydrophilic groups. The reactants and their amounts are selected to ensure that the resulting polyurethane is hydroxy functional.

Suitable polyisocyanates for preparing the hydroxy functional polyurethane include any organic polyisocyanate, preferably monomeric diisocyanates. Especially preferred are polyisocyanates, especially diisocyanates, having aliphatically- and/or cycloaliphatically-bound isocyanate groups, although polyisocyanates having aromatically-bound isocyanate groups are not excluded and may be used.

Examples of suitable polyisocyanates which may be used include ethylene diisocyanate, 1,4-tetramethylene diisocyanate, 1,6-hexamethylene diisocyanate, 2,4,4-trimethyl-1,6-hexamethylene diisocyanate, 1,12-dodecane diisocyanate, cyclobutane-1,3-diisocyanate, cyclohexane-1,3- and/or -1,4-diisocyanate, 1-isocyanato-2-isocyanatomethyl cyclopentane, 1-isocyanato-3,3,5-trimethyl-5-isocyanatomethyl cyclohexane (isophorone diisocyanate or IPDI), 2,4- and/or 2,6-hexahydrotoluylene diisocyanate, 2,4'- and/or 4,4'-dicyclohexylmethane diisocyanate, α,α,α',α'-tetramethyl-1,3- and/or -1,4-xylylene diisocyanate, 1,3- and 1,4-xylylene diisocyanate, 1-isocyanato-1-methyl-4(3)-isocyanatomethyl-cyclohexane, 1,3- and 1,4-phenylene diisocyanate, 2,4- and/or 2,6-toluylene diisocyanate, diphenyl methane-2,4'- and/or -4,4'-diisocyanate, naphthalene-1,5-diisocyanate, triphenyl methane-4,4',4"-triisocyanate, polyphenyl polymethylene polyisocyanates of the type obtained by condensing aniline with formaldehyde followed by phosgenation, and mixtures of the above-mentioned polyisocyanates.

Suitable high molecular weight polyols for preparing the hydroxy functional polyurethane include those which are known from polyurethane chemistry and have molecular weights ($M_n$) of 400 to 6,000, preferably 400 to 3,000. Examples of the high molecular weight compounds include:

1) polyhydroxy polyesters which are obtained from polyhydric, preferably dihydric alcohols to which trihydric alcohols may be added and polybasic, preferably dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids may be aliphatic, cyclocycloaliphatic, aromatic and/or heterocyclic and they may be unsaturated and/or substituted, e.g. by halogen atoms. Examples of these acids include succinic acid, adipic acid, suberic acid, azelaic acid, sebacic acid, phthalic acid, isophthalic acid, trimellitic acid, phthalic acid anhydride, tetrahydropthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids such as oleic acid (which may be mixed with monomeric fatty acids), dimethyl terephthalate and bis-glycol terephthalate. Suitable polyhydric alcohols include ethylene glycol, 1,2- and 1,3-propylene glycol, 1,3- and 1,4-butanediol, 1,6-hexanediol, 1,8-octanediol, neopentyl glycol, diethylene glycol,

2-methyl-1,3-propylene glycol, 2,2-dimethyl-1,3-propylene glycol, the various isomeric bis-hydroxymethyl cyclohexanes, 2,2,4-trimethyl-1,3-pentanediol, glycerine and trimethylol propane.

2) Polylactones generally known from polyurethane chemistry, e.g., polymers of ε-caprolactone initiated with the above-mentioned polyhydric alcohols.

3) Polycarbonates containing hydroxyl groups such as the products obtained from reaction of the polyhydric alcohols previously set forth for preparing the polyhydroxy polyesters (preferably dihydric alcohols such as 1,3-propanediol, 1,4-butanediol, 1,4-dimethylol cyclohexane, 1,6-hexanediol, diethylene glycol, triethylene glycol or tetraethylene glycol) with phosgene, diaryl carbonates such as diphenyl carbonate or cyclic carbonates such as ethylene or propylene carbonate. Also suitable are polyester carbonates obtained by the reaction of lower molecular weight oligomers of the above-mentioned polyesters or polylactones with phosgene, diaryl carbonates or cyclic carbonates.

4) Polyethers include the polymers obtained by the reaction of starting compounds which contain reactive hydrogen atoms with alkylene oxides such as propylene oxide, butylene oxide, styrene oxide, tetrahydrofuran, epichlorohydrin or mixtures of these alkylene oxides. Certain proportions of ethylene oxide may also be included, provided the polyether does not contain more than 10% by weight of ethylene oxide; however, polyethers which do not contain ethylene oxide are preferably used. Suitable starting compounds containing at least one reactive hydrogen atom include the polyols set forth as suitable for preparing the polyhydroxy polyesters and, in addition, water, methanol, ethanol, 1,2,6-hexanetriol, 1,2,4-butanetriol, trimethylol ethane, pentaerythritol, mannitol, sorbitol, methyl glycoside, sucrose, phenol, isononyl phenol, resorcinol, hydroquinone and 1,1,1- or 1,1,2-tris-(hydroxylphenyl)ethane. Polyethers which have been obtained by the reaction of starting compounds containing amino groups can also be used, but are less preferred for use in the present invention. Suitable amine starting compounds include ethylene diamine, diethylene triamine, triethylene tetraamine, 1,6-hexanediamine, piperazine, 2,5-dimethyl piperazine, 1-amino-3-aminomethyl-3,5,5-trimethylcyclohexane, bis(4-aminocyclohexyl)methane, bis(4-amino-3-methylcyclohexyl)methane, 1,4-cyclohexanediamine, 1,2-propanediamine, hydrazine, aminoacid hydrazides, hydrazides of semicarbazido carboxylic acids, bis-hydrazides and bis-semicarbazides, ammonia, methylamine, tetramethylenediamine, ethanolamine, diethanolamine, triethanolamine, aniline, phenylenediamine, 2,4- and 2,6-toluylenediamine, polyphenylene polymethylene polyamines of the kind obtained by the aniline/formaldehyde condensation reaction and mixtures thereof. Resinous materials such as phenol and cresol resins may also be used as the starting materials. The preferred starting compounds for the polyethers are those compounds which exclusively contain hydroxyl groups, while compounds containing tertiary amine groups are less preferred and compounds containing isocyanate-reactive-NH groups are much less preferred.

Polyethers modified by vinyl polymers are also suitable for the process according to the invention. Products of this kind may be obtained by polymerizing, e.g., styrene and acrylonitrile in the presence of polyethers (U.S. Patent Nos. 3,383,351; 3,304,273; 3,523,095; and 3,110,695; and German Patent No. 1,152,536). Also suitable as polyethers are amino polyethers wherein at least a portion of the hydroxyl groups of the previously described polyethers are converted to amino groups.

5) Polythioethers such as the condensation products obtained from thiodiglycol on its own and/or with other glycols, dicarboxylic acids, formaldehyde, amino carboxylic acids or amino alcohols. The products are either polythio mixed ethers, polythio ether esters, or polythioether ester amides, depending on the co-components.

6) Polyacetals including those obtained from the above mentioned polyhydric alcohols, especially diethylene glycol, triethylene glycol, 4,4'-dioxyethoxy-diphenyldimethylene, 1,6-hexanediol and formaldehyde. Polyacetals suitable for use in the invention may also be prepared by the polymerization of cyclic acetals.

7) Polyether esters containing isocyanate-reactive groups and known in the art.

8) Polyester amides and polyamides including the predominantly linear condensates obtained from polyvalent saturated and unsaturated carboxylic acids or their anhydrides and polyvalent saturated and unsaturated amino alcohols, diamines, polyamines, or mixtures thereof.

The preferred high molecular weight isocyanate-reactive compounds for use in the process according to the invention are the dihydroxy polyesters, dihydroxy polylactones, dihydroxy polycarbonates and dihydroxy polyester carbonates.

Suitable low molecular weight isocyanate-reactive compounds which may optionally be used in accordance with the present invention have molecular weights of up to about 400 and functionalities which correspond to those of the hydroxy functional polyurethanes. Examples include the polyols and diamines previously set forth for use in the preparation of the polyhydroxy polyesters and the polyethers and the aminoalcohols set forth hereinafter.

In order to make the hydroxy functional polyurethanes water dispersible, it is necessary to chemically incorporate hydrophilic groups, i.e., anionic groups, potential anionic groups or nonionic hydrophilic groups, into the polyisocyanate component. Suitable hydrophilic components contain at least one isocyanate-reactive group and at least one hydrophilic group or potential hydrophilic group. Examples of compounds which may be used to incorporate potential ionic groups include aliphatic hydroxy carboxylic acids, aliphatic or aromatic aminocarboxylic acids with primary or secondary amino groups, aliphatic hydroxy sulfonic acids and aliphatic or aromatic aminosulfonic acids with primary or secondary amino groups. These acids preferably have molecular weights below 400. It should be emphasized that the carboxylic acid groups are not considered to be isocyanate-reactive groups due to their sluggish reactivity with isocyanates.

The preferred anionic groups for incorporation into the hydroxy functional polyurethanes in the present invention are carboxylate groups and these groups may be introduced by using hydroxy-carboxylic acids of the general formula:

$$(HO)_xQ(COOH)_y$$

wherein

Q represents a straight or branched, hydrocarbon radical containing 1 to 12 carbon atoms, and

x and y represent values from 1 to 3.

Examples of these hydroxy-carboxylic acids include citric acid and tartaric acid.

The preferred acids are those of the above-mentioned formula wherein x = 2 and y = 1. These dihydroxy alkanoic acids are described in U.S. Patent 3,412,054, herein incorporated by reference. The preferred group of dihydroxy alkanoic acids are the α,α-dimethylol alkanoic acids represented by the structural formula:

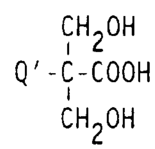

wherein Q' is hydrogen or an alkyl group containing 1 to 8 carbon atoms. The most preferred compound is α,α-dimethylol propionic acid, i.e, wherein Q' is methyl in the above formula.

The acid groups may be converted into hydrophilic anionic groups by treatment with a neutralizing agent such as an alkali metal salt, ammonia or a primary, secondary or preferably tertiary amine in an amount sufficient to render the hydroxy functional polyurethanes water dispersible. Suitable alkali metal salts include sodium hydroxide, potassium hydroxide, sodium hydride, potassium hydride, sodium carbonate, potassium carbonate, sodium bicarbonate and potassium bicarbonate. The use of alkali metal salts as neutralizing agents is less preferred than the use of volatile organic compounds such as volatile amines since they lead to reduced resistance to water swell in the coatings produced from the water dispersible compositions of the present invention. Therefore, less than 50%, preferably less than 20% and most preferably none of the acid groups should be neutralized with alkali metals.

The preferred volatile amines for neutralizing the acid groups are the tertiary amines, while ammonia and the primary and secondary amines are less preferred. Examples of suitable amines include trimethylamine, triethylamine, triisopropylamine, tributylamine, N,N-dimethyl-cyclohexylamine, N,N-dimethylstearylamine, N,N-dimethylaniline, N-methylmorpholine, N-ethyl-morpholine, N-methylpiperazine, N-methylpyrrolidine, N-methylpiperidine, N,N-dimethylethanolamine, N,N-diethylethanolamine, triethanolamine, N-methyldiethanolamine, dimethylaminopropanol, 2-methoxy-ethyldimethylamine, N-hydroxyethylpiperazine, 2-(2-dimethylaminoethoxy)ethanol and 5-diethylamino-2-pentanone. The most preferred tertiary amines are those which do not contain isocyanate-reactive groups as determined by the Zerewitinoff test since they are capable of reacting with isocyanate groups during the curing of the compositions of the present invention.

In a preferred embodiment of the present invention volatile tertiary amines are used so that when the water dispersible coating composition of the subject application are cured, the tertiary amine is removed from the coated substrate.

The acid groups may be converted into hydrophilic anionic groups by treatment with the alkali metal or preferably the volatile amine either before, during or after their incorporation into the hydroxy functional polyurethane. However, it is preferred to neutralize the acid groups after their incorporation.

The compounds containing lateral or terminal, hydrophilic ethylene oxide units have at least one, preferably one, isocyanate-reactive group and are an optional component, which may be present in an amount sufficient to provide a content of hydrophilic ethylene oxide units (calculated as $-CH_2-CH_2-O-$) present in lateral or terminal chains of up to 25% by weight. When compounds containing hydrophilic ethylene oxide units are used, they are preferably incorporated into the hydroxy functional polyurethanes in an amount sufficient to provide a content of hydrophilic ethylene oxide units of greater than 1% by weight, more preferably greater than 3%

by weight, based on the weight of the hydroxy functional polyurethane. The preferred upper limit for the hydrophilic ethylene oxide units is 10% by weight, more preferably 7% by weight, based on the weight of the hydroxy functional polyurethane.

Hydrophilic components having terminal or lateral hydrophilic chains containing ethylene oxide units include compounds corresponding to the formulas

$$H\text{-}Z\text{-}X\text{-}Y\text{-}R''$$

or

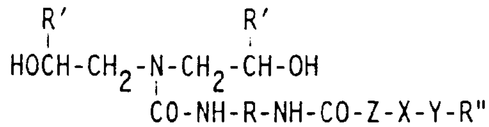

wherein

- R represents a difunctional radical obtained by removing the isocyanate groups from a diisocyanate corresponding to those previously set forth,
- R' represents hydrogen or a monovalent hydrocarbon radical containing from 1 to 8 carbon atoms, preferably hydrogen or a methyl group,
- R" represents a monovalent hydrocarbon radical having from 1 to 12 carbon atoms, preferably an unsubstituted alkyl radical having from 1 to 4 carbon atoms,
- X represents the radical obtained by removing the terminal oxygen atom from a polyalkylene oxide chain having from 5 to 90 chain members, preferably 20 to 70 chain members, wherein at least 40%, preferably at least 65%, of the chain members comprise ethylene oxide units and the remainder comprises other alkylene oxide units such as propylene oxide, butylene oxide or styrene oxide units, preferably propylene oxide units,
- Y represents oxygen or -NR'"- wherein R'" has the same definition as R" and
- Z represents a radical which corresponds to Y, but may additionally represent -NH-.

The compounds corresponding to the above formulae may be produced by the methods according to U.S. Patents 3,905,929, 3,920,598 and 4,190,566 (the disclosures of which are herein incorporated by reference). The monofunctional hydrophilic synthesis components are produced, for example, by alkoxylating a monofunctional compound such as n-butanol or N-methyl butylamine, using ethylene oxide and optionally another alkylene oxide, preferably propylene oxide. The resulting product may optionally be further modified (although this is less preferred) by reaction with ammonia to form the corresponding primary amino polyethers.

The hydroxy functional polyurethanes have a content of chemically incorporated anionic groups of 0 to 200, preferably 10 to 200, more preferably 10 to 180 and most preferably 20 to 100 milliequivalents per 100 g of solids, and a content of chemically incorporated nonionic groups of 0 to 25% by weight. When compounds containing hydrophilic ethylene oxide units are used, they are preferably incorporated into the hydroxy functional polyurethanes in an amount sufficient to provide a content of hydrophilic ethylene oxide units of greater than 1% by weight, more preferably greater than 3% by weight, based on the weight of the hydroxy functional polyurethane. The upper limit for the content of the hydrophilic ethylene oxide units is preferably 10% by weight, more preferably 7% by weight, based on the weight of the hydroxy functional polyurethane. The amounts of the anionic groups and hydrophilic ethylene oxide units must be sufficient for the hydroxy functional polyurethane to remain stably dispersed in water.

The hydroxy functional polyurethanes may be produced according to methods known in the art. For example, the above-mentioned reaction components may be added in any sequence. One preferred method comprises mixing all of the isocyanate-reactive components and subsequently reacting the mixture with the polyisocyanate. The number of isocyanate-reactive groups per isocyanate group is maintained at 1.1:1 to 4:1, preferably 1.2:1 to 1.8:1. The mixture is then reacted until no further NCO groups can be detected. The reaction may take place in the melt or in the presence of organic solvents. Suitable solvents include the water-miscible solvents normally used in polyurethane chemistry such as esters, ketones, halogenated hydrocarbons, alkanes and arenes. Low boiling solvents include those boiling at temperatures in the range of 40° to 90°C such as acetone and methyl ethyl ketone. In addition, higher boiling solvents such as N-methyl pyrrolidinone, dimethyl formamide, dimethyl sulfoxide, propylene glycol monomethyl ether acetate and ethylene glycol mono(-methyl, -ethyl or -butyl) ether acetate may be utilized.

In another preferred method an NCO terminated prepolymer is prepared by reacting the polyisocyanate with the high molecular weight polyol, the isocyanate-reactive compound containing the hydrophilic or potential

hydrophilic group and optionally a low molecular weight compound containing at least two isocyanate reactive groups. The NCO prepolymer is then converted to a hydroxy functional polyurethane by a further reaction with a primary or secondary monoamine containing at least one hydroxy group. Suitable examples of these monoamines include ethanolamine, N-methylethanolamine, diethanolamine, 3-amino-1-propanol and 2-amino-2-hydroxymethylpropane-1,3-diol.

In a further preferred method an NCO terminated prepolymer is prepared as described above. However, instead of capping the isocyanate groups with a monoamine, the NCO terminated prepolymer is chain extended with a hydroxy group-containing polyamine, e.g, N-hydroxyethyl-ethylene diamine. When this chain extender is used in an amount which is sufficient to provide an NCO:NH ratio of approximately 1.0, a chain extended, hydroxy functional polyurethane is obtained which contains lateral hydroxy groups.

The water dispersible polyisocyanates to be used according to the invention have an (average) NCO functionality of at least 1.8, preferably 2 to 8 and more preferably 2.5 to 6, and an NCO content of 2 to 30%, preferably 10 to 25%. Their dispersibility in water is ensured by a sufficient content of suitable emulsifiers.

Suitable polyisocyanates for preparing the water dispersible polyisocyanates include any of the monomeric diisocyanates or polyisocyanates which have previously been described as suitable for the preparation of the hydroxy functional polyurethanes, preferably the monomeric aliphatic and/or cycloaliphatic diisocyanates. However, it is preferred to prepare the water dispersible polyisocyanates from polyisocyanate adducts containing carbodiimide, uretdione, biuret, allophanate, urethane or isocyanurate groups, or from NCO prepolymers which have been prepared from the previously described aliphatic and/or cycloaliphatic diisocyanates.

Suitable polyisocyanate adducts include:

1) Isocyanurate group-containing polyisocyanates prepared from the previously described aliphatic and/or cycloaliphatic diisocyanates. Particularly preferred are isocyanato-isocyanurates based on 1,6-diisocyanatohexane and/or 1-isocyanato-3,3,5-trimethyl-5-isocyanatomethyl-cyclohexane (isophorone diisocyanate or IPDI). The production of these isocyanurate group-containing polyisocyanates is described, for example, in DE-PS 2,616,416, EP-OS 3,765, EP-OS 10,589, EP-OS 47,452, US-PS 4,288,586 and US-PS 4,324,879. The isocyanato-isocyanurates generally have an average NCO functionality of 3 to 3.5 and an NCO content of 5 to 30%, preferably 10 to 25% and most preferably 15 to 25% by weight.

2) Uretdione diisocyanates prepared from the previously described aliphatic and/or cycloaliphatic diisocyanates. The uretdione diisocyanates are preferably prepared from hexamethylene diisocyanate and/or of IPDI. The uretdione diisocyanates can be used as the sole component for preparing the water dispersible polyisocyanates or in admixture with other aliphatic and/or cycloaliphatic polyisocyanates, particularly the isocyanurate group-containing polyisocyanates set forth under (1) above.

3) Biuret group-containing polyisocyanates prepared from the previously described aliphatic and/or cycloaliphatic diisocyanates, particularly tris-(6-isocyanatohexyl)-biuret or mixtures thereof with its higher homologues. The biuret group-containing polyisocyanates generally have a most preferred NCO content of 18 to 22% by weight and an average NCO functionality of 3 to 3.5.

4) Urethane and/or allophanate group-containing polyisocyanates prepared from the previously described aliphatic and/or cycloaliphatic diisocyanates, preferably hexamethylene diisocyanate or IPDI, by reacting excess quantities of the diisocyanates with the previously described low molecular weight polyols, preferably trimethylol propane, glycerine, 1,2-dihydroxy propane or mixtures thereof. The urethane and/or allophanate group-containing polyisocyanates have a most preferred NCO content of 12 to 20% by weight and an (average) NCO functionality of 2.5 to 3.

5) Oxadiazinetrione group-containing polyisocyanates prepared from the previously described aliphatic and/or cycloaliphatic diisocyanates, preferably hexamethylene diisocyanate.

The materials to be used for the preparation of the water dispersible NCO prepolymer are the same as those used for the preparation of the hydroxy functional polyurethane. In contrast to the hydroxy functional polyurethanes the NCO prepolymers have terminal isocyanate groups. The type and proportions of the above-mentioned starting materials are therefore selected such that the resulting prepolymers have terminal isocyanate groups.

The NCO prepolymers are less preferred than the polyisocyanate adducts for use in the preparation of the water dispersible polyisocyanates because due to their higher molecular weight they also have a higher viscosity. The higher viscosity may necessitate the additional use of a solvent in order to maintain the polyisocyanate stably dispersed in water after it is blended with the aqueous dispersion of the hydroxy functional polyurethane.

Mixtures of the monomeric polyisocyanates, the polyisocyanate adducts and/or the NCO prepolymers may also be used for preparing the water dispersible polyisocyanates.

The compounds for providing hydrophilicity to the water dispersible polyisocyanates are also the same as those previously described for providing hydrophilicity to the hydroxy functional polyurethanes with the exception of polyhydroxy carboxylic acids, especially with the exception of α,α-dimethylol alkanoic acids, which acids are exclusively used for the hydrophilic modification of component I. The water dispersible polyisocyanates are prepared by reacting the polyisocyanates with the hydrophilic compounds containing isocyanate-reactive groups, preferably with the monofunctional, nonionic hydrophilic polyether alcohols, in an amount sufficient to provide the desired amount of hydrophilic groups at a temperature of 50 to 130°C.

The water dispersible polyisocyanates have a content of chemically incorporated nonionic groups of 0 to 25% by weight, preferably 2 to 25% by weight, more preferably 5 to 20% by weight and most preferably 7 to 15% by weight of hydrophilic ethylene oxide units (calculated as $-CH_2-CH_2-O-$) incorporated in lateral or terminal polyether chains, and a content of chemically incorporated anionic groups of 0 to 200 milliequivalents per 100 g of solids, based on the weight of the water dispersible polyisocyanate. When anionic groups are used, they are preferably incorporated into the water dispersible polyisocyanate in an amount sufficient to provide an anionic group content of least 10, more preferably at least 20 milliequivalents per 100 g of solids, based on the weight of the water dispersible polyisocyanate. The upper limit for the content of the anionic groups is preferably 180, more preferably 100 milliequivalents per 100 g of solids, based on the weight of the water dispersible polyisocyanate.

In accordance with a preferred embodiment of the present invention when the water dispersible polyisocyanate contains uretdione groups, it does not also contain chemically incorporated carboxylate groups to provide hydrophilicity.

In order to reduce the viscosity of the water dispersible polyisocyanates an organic solvent such as those previously described for use with the hydroxy functional polyurethanes may be added to the water dispersible polyisocyanate before they are blended with the hydroxy functional polyurethane. It is also possible to convert the water dispersible polyisocyanates into aqueous dispersions with a solids content of 10 to 65% by weight. The production of these dispersions should take place shortly before the dispersed polyisocyanates are blended with the hydroxy functional polyurethanes.

In accordance with a second, optional embodiment of the present invention it has been found that it is possible to obtain coatings having a high gloss by incorporating a particular polyol additive into the aqueous polyurethane dispersion. In the absence of this additive, it is necessary to incorporate additional amounts of organic solvents to obtain similar gloss levels. Because one of the primary reasons for developing aqueous-based coating compositions was to reduce or eliminate the use of such organic solvents, it is preferred to incorporate the polyol additive when high gloss coatings are desired.

Suitable polyols which may optionally be used as additives in accordance with the present invention to improve the gloss of coatings prepared from the two component coating compositions are polyols which may contain ether groups. The polyols have a molecular weight of 62 to 1000, preferably 120 to 250. Examples of these polyols include ethylene glycol, 1,2- and 1,3-propylene glycol, 1,3- and 1,4-butanediol, 1,6-hexanediol, 1,8-octanediol, neopentyl glycol, diethylene glycol, 2-methyl-1,3-propylene glycol, 2,2-dimethyl-1,3-propylene glycol, the various isomeric bis-hydroxymethyl cyclohexanes, 2,2,4-trimethyl-1,3-pentanediol, glycerine, trimethylol propane, diethylene glycol, triethylene glycol, tetraethylene glycol, dipropylene glycol, tripropylene glycol, tetrapropylene glycol, dibutylene glycol, tributylene glycol and tetrabutylene glycol. Also, suitable are the ethoxylation and/or propoxylation products of the preceding polyols, preferably the monomeric polyols. The polyols are optionally used in an amount of up to 20% by weight, preferably 2 to 20% by weight and more preferably 5 to 15% by weight, based on the weight of components I and II.

The higher molecular weight ether group-containing polyols are less preferred as additives for the coating compositions of the present invention because even though they improve the gloss of the resulting coatings, either the storage stability of the coating compositions or some of the other properties of the resulting coatings are not as good as those obtained from the preferred low molecular weight polyols.

The water dispersible polyisocyanate should not be blended with the hydroxy functional polyurethane or the optional polyol additive until it is time to apply the coating composition to a suitable substrate. As with two component, solvent based coating compositions, the mixture of the coreactants has a limited useful potlife, which is dependent upon the reactivity of the coreactants, ratios of coreactants and catalysts present in the system. When it is desired to blend the components, the components may be blended in any order. However, the maximum pot life is obtained if the optional polyol additive is blended with an aqueous dispersion of the hydroxy functional polyurethane and then the water dispersible polyisocyanate is added to this mixture with mild stirring. Methods for blending the components are known in the art.

The hydroxy functional polyurethane and the water dispersible polyisocyanate should be blended in amounts sufficient to provide a ratio of isocyanate groups from the water dispersible polyisocyanate to hydroxy groups of the hydroxy functional polyurethane of 0.8:1 to 6:1, preferably about 1.2:1 to 4:1. After the two components have been blended the coating composition should have a solids content of about 2 to 60%, preferably about 10 to 50% by weight.

The aqueous coating compositions according to the present invention may be applied to substrates using any of the various techniques known in the art. In addition, the aqueous compositions may be blended with other types of resins optionally containing isocyanate-reactive groups or with amine-or phenol-formaldehyde condensates known in the art. They can also contain pigments, levelling agents, catalysts, and other auxiliaries known in the art. Examples of the application techniques, resins and auxiliaries are set forth in U.S. Patent 4,408,008, which is herein incorporated by reference.

The invention is further illustrated but is not intended to be limited by the following examples in which all parts and percentages are by weight unless otherwise specified.

EXAMPLES

Isocyanate Crosslinker A

To 900 parts of a polyisocyanate containing isocyanurate groups and prepared from hexamethylene diisocyanate (Desmodur N-3300, available from Mobay Corp.) were added 100.0 parts of a polyether monohydric alcohol having an OH number of 26.2 and prepared from n-butanol, ethylene oxide, and propylene oxide (molar ratio of ethylene oxide to propylene oxide - 83:17). The reaction mixture was stirred and heated at 110°C for 1.5 hours.

Solids content - 100%
Viscosity - 3900 (25°C, #4 spindle, 60 rpm)
Isocyanate content - 18.8%

Isocyanate Crosslinker B

The reaction product of 500 parts of the polyisocyanate used to prepare Isocyanate Crosslinker A and 26.3 parts of a polyethylene oxide polyether monohydric alcohol having a molecular weight of 1210 and initiated with 3-ethyl-3-hydroxymethyl-oxetane.

Isocyanate content - 19.5%

Example 1

Preparation of Dispersion A

A mixture of 132.8 parts of a polyester diol prepared from phthalic anhydride and hexanediol (OH number 56), 5.0 parts of the polyether monohydric alcohol used to prepare Isocyanate Crosslinker A, 13.4 parts of neopentylglycol, 20.6 parts of $\alpha,\alpha$ dimethylolpropionic acid, and 90 parts of N-methylpyrrolidinone was heated to 70°C with stirring. To this mixture, 127.6 parts of 4,4'-dicyclohexylmethane diisocyanate were added, and the resulting mixture was stirred and heated at 110°C for 1 hour until the theoretical isocyanate content of 3.0 was reached. The reaction was cooled to 70°C, and 15.6 parts of triethylamine were added. After stirring for 15 minutes at 70°C, 17.0 parts of ethanolamine and 50 parts of N-methylpyrrolidinone were added. After the reaction exothermed to 92°C, the mixture was cooled to 70°C and stirred until it was found to be NCO-free by IR. 5.0 parts of the above polyether monohydric alcohol in 50 parts of N-methylpyrrolidone were added, and the reaction mixture stirred for 30 minutes. 391.3 parts of distilled water at 50°C were added to the mixture and the resulting dispersion was stirred for one hour.

pH - 9.3
Solids - 35%
functionality - 2
Urethane/urea content - 13.0% (calculated as NH-C-O, MW 43)

Two Component Formulation

To 200 parts of Dispersion A were added 40.0 parts of Isocyanate Crosslinker A (NCO/OH equivalent ratio - 3.0), and 0.12 parts of a 10% aqueous solution of Surfactant A (Silwet L-77, available from Union Carbide) and the mixture was stirred vigorously. Drawdown bars were used to make 6 mil (wet film thickness, WFT) films on glass plates and 5 mil WFT films on Bonderite treated steel panels.

Examples 2-6

Dispersions B-F, Compositions

Dispersions B-F were prepared in the same manner as Dispersion A using the materials and amounts set forth in Table 1.

TABLE 1

| Dispersion | B | C | D | E | F |
|---|---|---|---|---|---|
| Polyester A | 125.2 | 56.4 | | | 323.8 |
| Polyester B | | | 95.0 | 56.5 | |
| NPG | 0.2 | 28.3 | 17.1 | 22.3 | 31.8 |
| TMP | 4.7 | | | 4.7 | 58.6 |
| DMPA | 8.3 | 8.3 | 8.3 | 8.3 | 24.1 |
| NMP | 60.0 | 60.0 | 60.0 | 120.0 | 300.0 |
| HMDI | 60.6 | 107.2 | 83.9 | 107.7 | 261.8 |
| TEA | 6.0 | 6.0 | 6.0 | 6.0 | 17.2 |
| EOA | | | 5.7 | | |
| DEOA | 11.0 | 9.8 | | 11.0 | |
| Distilled Water | 424.0 | 424.0 | 424.0 | 364.0 | 982.7 |
| % Solids | 30 | 30 | 30 | 30 | 35 |
| pH | 9.2 | 9.0 | 9.8 | 9.4 | 8.1 |
| Functionality | 6 | 4 | 2 | 6 | 6 |
| Urethane/Urea (%) | 9.5 | 16.8 | 13.1 | 16.8 | 12.2 |

Polyester A - a hexanediol phthalate, OH number 56.1
Polyester B - a neopentyl glycol adipate, OH number 56.1
NPG - neopentyl glycol
TMP - trimethylol propane
DMPA - α,α-dimethylolpropionic acid
NMP - N-methylpyrrolidinone
HMDI - 4,4'-dicyclohexylmethane diisocyanate
TEA - triethylamine
EOA - ethanolamine
DEOA - diethanolamine

Two Component Formulations 2-6

Two component formulations 2-6 were prepared as in Example 1 using the materials and amounts set forth in Table 2.

TABLE 2

| Example | 2 | 3 | 4 | 5 | 6 |
|---|---|---|---|---|---|
| Dispersion | B | C | D | E | F |
| Amount | 75.0 | 75.0 | 75.0 | 75.0 | 180.0 |
| Isocyanate | 19.9 | 17.7 | 13.3 | 19.0 | 49.6 |
| Crosslinker A | | | | | |
| Surfactant A | 0.05 | 0.08 | 0.08 | 0.05 | 0.12 |
| NCO/OH equiv ratio | 4 | 4 | 3 | 4 | 3.6 |

Example 7

Preparation of Dispersion G

A mixture of 122.5 parts of a polyester of phthalic anhydride and hexanediol (OH number 56), 4.0 parts of neopentylglycol and 8.3 parts of $\alpha,\alpha$ dimethylolpropionic acid was heated to 70°C with stirring. To this mixture 60.6 parts of 4,4'-dicyclohexylmethane diisocyanate were added, and the resulting mixture was stirred and heated at 105°C for 2 hours. Through the reflux condenser 100 parts of acetone were added and the reaction mixture was cooled to 56°C. 6.0 parts of triethylamine were added, followed in 15 minutes by the dropwise addition of 14.7 parts of diethanolamine. When the reaction mixture was NCO-free (as determined by IR), 383.9 parts of distilled water were added with vigorous stirring. The acetone was immediately removed from the 55°C dispersion under reduced pressure.

pH - 8.0
Solids content - 35%
Functionality - 4
Urethane/urea content - 9.5%

Two Component Formulation

To 150 parts of Dispersion G were added 46.5 parts of Isocyanate Crosslinker A (NCO/OH ratio - 3.0) and 0.12 parts of a 10% aqueous solution of Surfactant A; the mixture was stirred vigorously. Drawdown bars were used to make 6 mil WFT films on glass plates and 5 mil WFT films on steel panels treated with Bonderite chemical compositions available from Parker.

Example 8 (Comparison)

Dispersion H

180.0 parts of a polyester of adipic acid and butanediol (OH number 50) were dehydrated under vacuum at 110°C for 30 minutes with stirring, then cooled to 70°C. After the addition of 8.0 parts of IPDI and 12.1 parts of HDI, stirring was continued at 80°C until a constant isocyanate content of 1.1% was reached. 400.0 parts of acetone were slowly added while maintaining the temperature at 50°C. A solution of 6.5 parts of the sodium salt of N-(2-aminoethyl)-2-aminoethanesulfonic acid (45% in water) and 1.1 parts of diethanolamine in 25 parts of distilled water were stirred into the homogeneous acetone solution at 50°C. After 7 minutes, the reaction mixture was dispersed in 286.4 parts distilled water and the acetone was immediately distilled off.

pH - 7.5
Solids content - 40%
Urethane/urea content - 4.5%

Two Component Formulation

To 75.0 parts of Dispersion H were added 1.4 parts of Isocyanate Crosslinker B and 0.08 part of a 10% aqueous solution of Surfactant A (NCO/OH equivalent ratio - 4.0); the mixture was stirred vigorously. Drawdown bars were used to make 6 mil WFT films on glass and 5 mil WFT films on Bonderite treated steel panels.

Example 9 (Comparison)

Dispersion I

To a stirred mixture at 70°C of 116.4 parts of Formrez YA-86-1 (available from Witco), 6.1 parts of an anhydrous polyether of propylene oxide and bisphenol A having an OH number of 202 (molecular weight 550), 8.2 parts of the monohydric polyether used to prepare Isocyanate Crosslinker A, 19.4 parts of the sodium sulfonate salt (MW 430) of propoxylated 1,4-butanediol (70% solution in toluene) were added 13.8 parts of HDI and 27.2 parts of IPDI. The reaction exothermed to 105°C and was maintained at that temperature until the theoretical isocyanate content of 4.5% was attained. This mixture was then cooled to 60°C and dispersed into 250.7 parts of distilled water with vigorous agitation. Immediately, a solution of 2.5 parts of ethylenediamine, 8.2 parts of an amine-terminated polyether (Jeffamine D-400, available from Texaco), and 5.1 parts of diethanolamine in 46.3 parts of distilled water was added dropwise. The dispersion was stirred at 60°C for 3 hours and then filtered and cooled.

pH - 6.8
viscosity - 100 mPa.S
solids - 40%
urethane/urea content - 8.75%

Two Component Formulation

To 150 parts of Dispersion I were added 31.5 parts of Isocyanate Crosslinker B (NCO/OH equivalent ratio

- 6.0), and 0.12 parts of a 10% aqueous solution of Surfactant A; the mixture was stirred vigorously. Drawdown bars were used to make 6 mil WFT films on glass and 5 mil WFT films on Bonderite treated steel panels.

All films were cured for 2-3 weeks at ambient temperature and humidity before testing.

Two Component Film Evaluation

| Example | MEK 2x Rubs | Pendulum Hardness | Impact Dir/Ind | Tensile $kg/cm^2$ | (psi) | Elongation (%) |
|---|---|---|---|---|---|---|
| 1 | 200+ | 127 | 160/160 | 316 | (4483) | 25 |
| 2 | 200+ | 116 | 160/160 | 444 | (6310) | 20 |
| 3 | 200+ | 148 | 100/60 | 566 | (8066) | 10 |
| 4 | 200+ | 132 | 160/160 | 405 | (5762) | 15 |
| 5 | 200+ | 179 | 160/160 | 642 | (9122) | 20 |
| 6 | 200+ | 116 | 160/160 | 445 | (6327) | 25 |
| 7 | 200+ | 122 | 160/160 | 334 | (4745) | 20 |
| 8 (Comp) | 30 | 62 | 160/160 | 174 | (2476) | 90 |
| 9 (Comp) | 45 | 55 | 160/160 | 174 | (2472) | 80 |

Test Methods

Tensile properties were determined according to ASTM D 638 using a Type 4 die on an Instron model 1130. Films prepared on glass were removed prior to testing.

The Erichsen pendulum hardness was determined on the films cast onto the Bonderite treated steel panels. The tester was leveled, and the steel panel was placed on the sample stage. The fulcrum points of the pendulum were lowered onto the cured film and the pendulum was deflected 6° and released. The time for the pendulum to damp to a 3° deflection was recorded.

The MEK double rubs were measured by wetting a cloth with methylethyl ketone and rubbing the cloth across the coating until the coating was removed; each back and forth motion constituting one rub.

The Gardner Impact was determined according to ASTM D 3029-84, method G.

## Example 10

Preparation of Dispersion J

A mixture of 125.1 parts of a polyester of phthalic anhydride and hexanediol (OH number 56), 6.2 parts of neopentylglycol, 8.3 parts of α,α dimethylolpropionic acid, and 30 parts of N-methylpyrrolidone was heated to 70°C with stirring. To this mixture 60.6 parts of 4,4'-dicyclohexylmethane diisocyanate was added, and the resulting mixture was stirred and heated to 105°C for two hours until the theoretical isocyanate content of 1.7% was reached. The mixture was cooled to 80°C, and 6.0 parts of triethylamine was added. After stirring for 15 minutes at 70°C, 9.8 parts of diethanolamine was added. The reaction exothermed to 86°C and the mixture was cooled to 75°C and stirred until no isocyanate groups were detected by IR. Immediately before dispersing in water, 60 parts of tripropylene glycol was added to the reaction mixture, which was then dispersed in 294.0 parts of distilled water at 50°C and stirred for one hour.

pH - 7.8

Viscosity - 325 mPa.s (25°C, Brookfield #2 spindle, 60 rpm)

Solids content - 45%

functionality - 4

Urethane/urea content - 13.0%

Two Component Formulation

To 50.0 parts of Dispersion J were added 44.9 parts of Isocyanate Crosslinker A (NCO:OH equivalent ratio - 3:1) and 5 drops of a 10% aqueous solution of Surfactant A; the mixture was stirred vigorously. 19.0 parts of distilled water was then stirred into the emulsion. A drawdown bar was used to make 5 mil (wet film thickness) films on glass plates and steel panels. The film properties are reported in the table following Example 11.

Example 11 (Comparison)

Preparation of Dispersion K

A dispersion was prepared as in Example 10 except that the tripropylene glycol was omitted from the formulation, and the reaction mixture was dispersed in 354 parts of distilled water.

pH - 9.1
Viscosity - 940 mPa.s (25°C, Brookfield #2 spindle, 30 rpm)
Solids content - 35%
functionality - 4
Urethane/urea content - 13.0%

Two Component Formulation

To 75.0 parts of Dispersion K were added 15.5 parts of Isocyanate Crosslinker A (NCO:OH equivalent ratio - 3:1) and 5 drops of a 10% aqueous solution of Surfactant A; the mixture was stirred vigorously. A drawdown bar was used to make 5 mil (wet film thickness) films on glass plates and steel panels. The films from Examples 10 and 11 were cured at 75°C and 55% relative humidity for 2 weeks. The film properties are set forth in the following table.

| Example | MEK 2X Rubs | Tensile $kg/cm^2$ (psi) | Impact Dir/Ind | Pendulum Hardness | 60°C Gloss |
|---|---|---|---|---|---|
| 10 | 200+ | 389 (5534) | 160/160 | 141 sec | 97 |
| 11 (Comp) | 200+ | 258 (3686) | 160/160 | 88 sec | 30 |

Examples 12-17

Dispersions were prepared as in Example 10 except the alternate materials and/or quantities set forth in the following table were substituted for the 60 parts of tripropylene glycol used in Example 10. Because the number of hydroxyl equivalents varied among the different additives, minor adjustments were made to the amount of Isocyanate Crosslinker A used to prepare the dispersions in order to maintain an NCO:OH equivalent ratio of 3:1.

| Example # | Additive | Amount of Additive (Parts) | 60° Gloss of Two Component Film |
|---|---|---|---|
| 12 | Tripropylene glycol | 30 | 86 |
| 13 | Trimethylol-propane | 30 | 85 |
| 14 | Diethylene glycol | 30 | 89 |
| 15 | 2-ethyl-1,3-hexane diol | 30 | 94 |
| 16 | Polyether 1* | 60 | 91 |
| 17 | Polyether 2** | 30 | 90 |

* Polyether having an OH number of 561 and prepared by the ethoxylation of diethylene glycol.

** Polyether having an OH number of 250 and prepared by the propoxylation of glycerol.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A two-component, aqueous polyurethane coating composition which may be cured at ambient temperature and which comprises
   I) a first component based on an aqueously dispersed polyurethane wherein said polyurethane has
      a) an average hydroxy functionality of at least 1.8,
      b) a total content of urethane and urea groups, calculated as -NH-CO- (molecular weight = 43), of 9 to 20% by weight, based on the weight of said polyurethane,
      c) 0 to 200 milliequivalents of chemically incorporated anionic groups per 100 g of polyurethane and
      d) 0 to 25% by weight, based on the weight of said polyurethane, of ethylene oxide units incorporated within terminal and/or lateral polyether chains,
   wherein components c) and d) are present in an amount which is sufficient to maintain the polyurethane stably dispersed in water,
   II) a second component based on a water dispersible polyisocyanate wherein said polyisocyanate has
      a) an isocyanate content of 2 to 30% by weight, based on the weight of the polyisocyanate,
      b) an average functionality of at least 1.8,
      c) 0 to 200 milliequivalents of chemically incorporated anionic groups per 100 g of polyisocyanate and
      d) 0 to 25% by weight, based on the weight of said polyisocyanate, of ethylene oxide units incorporated within terminal and/or lateral polyether chains,
   wherein components components c) and d) are present in an amount which is sufficient to maintain said polyisocyanate stably dispersed in water, and
   components I and II are present in an amount sufficient to provide an equivalent ratio of isocyanate groups to hydroxyl groups of 0.8:1 to 6:1, and
   III) optionally up to 20% by weight, based on the weight of components I and II, of a polyol which has a molecular weight of 62 to 1000 and may contain ether groups.

2. The coating composition of Claim 1 wherein said aqueously dispersed polyurethane has a hydroxy equivalent weight of 100 to 5000.

3. The coating composition of Claim 1 wherein said aqueously dispersed polyurethane has a hydroxy equivalent weight of 1000 to 3000, an average functionality of 2 to 6 and 10 to 180 milliequivalents of chemically incorporated anionic groups per 100 g of polyurethane.

4. The coating composition of Claims 1 to 3 wherein said polyol has a molecular weight of 62 to 250 and may contain ether groups.

5. The coating composition of Claims 1 to 4 wherein said aqueously dispersed polyisocyanate is based on the reaction product of a polyisocyanate adduct, and has an NCO functionality of 2.5 to 6, an NCO content of 10 to 25% by weight, based on the weight of said polyisocyanate and contains 2 to 15% by weight, based on the weight of said polyisocyanate, of ethylene oxide units incorporated within terminal and/or lateral polyether chains.

6. The coating composition of Claim 5 wherein said polyisocyanate adduct has aliphatically and/or cycloaliphatically bound isocyanate groups.

7. The coating composition of Claim 5 wherein said polyisocyanate contains isocyanurate groups and is prepared from 1,6-hexamethylene diisocyanate.

8. A coating which is prepared from a two-component, aqueous polyurethane coating composition which may be cured at ambient temperature and which comprises
   I) a first component based on an aqueously dispersed polyurethane wherein said polyurethane has
      a) an average hydroxy functionality of at least 1.8,
      b) a total content of urethane and urea groups, calculated as -NH-CO- (molecular weight = 43), of

9 to 20% by weight, based on the weight of said polyurethane,

c) 0 to 200 milliequivalents of chemically incorporated anionic groups per 100 g of polyurethane and

d) 0 to 25% by weight, based on the weight of said polyurethane, of ethylene oxide units incorporated within terminal and/or lateral polyether chains,

wherein components c) and d) are present in an amount which is sufficient to maintain the polyurethane stably dispersed in water,

II) a second component based on a water dispersible polyisocyanate wherein said polyisocyanate has

a) an isocyanate content of 2 to 30% by weight, based on the weight of the polyisocyanate,

b) an average functionality of at least 1.8,

c) 0 to 200 milliequivalents of chemically incorporated anionic groups per 100 g of polyisocyanate and

d) 0 to 25% by weight, based on the weight of said polyisocyanate, of ethylene oxide units incorporated within terminal and/or lateral polyether chains,

wherein components components c) and d) are present in an amount which is sufficient to maintain said polyisocyanate stably dispersed in water, and

components I and II are present in an amount sufficient to provide an equivalent ratio of isocyanate groups to hydroxyl groups of 0.8:1 to 6:1, and

III) optionally up to 20% by weight, based on the weight of components I and II, of a polyol which has a molecular weight of 62 to 1000 and may contain ether groups.

**Patentansprüche**

1. Wäßrige Zwei-Komponenten-Polyurethan-Beschichtungsmasse, die bei Umgebungstemperatur ausgehärtet werden kann, umfassend

I) eine erste Komponente auf der Basis eines wäßrigdispergierten Polyurethans, worin das Polyurethan

a) eine mittlere Hydroxy-Funktionalität von wenigstens 1,8,

b) einen Gesamt-Gehalt an Urethan- und Harnstoff-Gruppen, berechnet als -NH-CO- (Molekulargewicht = 43), von 9 bis 20 Gew.-%, bezogen auf das Gewicht des Polyurethans,

c) 0 bis 200 Milliäquivalente chemisch eingebauter, anionischer Gruppen auf 100 g Polyurethan und

d) 0 bis 25 Gew.-%, bezogen auf das Gewicht des Polyurethans, Ethylenoxid-Einheiten, eingebaut in endständigen oder seitenständigen Polyether-Ketten

aufweist, wobei die Komponenten c) und d) in einer Menge anwesend sind, die ausreicht, um das Polyurethan stabil in Wasser dispergiert zu halten,

II) eine zweite Komponente auf der Basis eines in Wasser dispergierbaren Polyisocyanats, worin das Polyisocyanat

a) einen Isocyanat-Gehalt von 2 bis 30 Gew.-%, bezogen auf das Gewicht des Polyisocyanats,

b) eine mittlere Funktionalität von wenigstens 1,8,

c) 0 bis 200 Milliäquivalente chemisch eingebauter, anionischer Gruppen auf 100 g Polyisocyanat und

d) 0 bis 25 Gew.-%, bezogen auf das Gewicht des Polyioscyanats, Ethylenoxid-Einheiten, eingebaut in endständigen oder seitenständigen Polyether-Ketten

aufweist, wobei die Komponenten c) und d) in einer Menge anwesend sind, die ausreicht, um das Polyisocyanat stabil in Wasser dispergiert zu halten, und worin die Komponenten I und II in einer Menge vorliegen, die ausreicht, ein Äquivalent-Verhältnis der Isocyanat-Gruppen zu den Hydroxyl-Gruppen von 0,8 : 1 bis 6 : 1 bereitzustellen und

III) gegebenenfalls bis zu 20 Gew.-%, bezogen auf das Gewicht der Komponenten I und II, eines Polyols, das ein Molekulargewicht von 62 bis 1 000 hat und Ether-Gruppen enthalten kann.

2. Beschichtungsmasse nach Anspruch 1, worin das wäßrig-dispergierte Polyurethan ein Hydroxy-Äquivalent von 100 bis 5 000 hat.

3. Beschichtungsmasse nach Anspruch 1, worin das wäßrig-dispergierte Polyurethan ein Hydroxy-Äquivalent von 1 000 bis 3 000, eine mittlere Funktionalität von 2 bis 6, und 10 bis 180 Milliäquivalente chemisch eingebauter, anionischer Gruppen auf 100 g Polyurethan hat.

4. Beschichtungsmasse nach den Ansprüchen 1 bis 3, worin das Polyol ein Molekulargewicht von 62 bis 250 hat und Ether-Gruppen enthalten kann.

5. Beschichtungsmasse nach den Ansprüchen 1 bis 4, worin das wäßrig-dispergierte Polyisocyanat auf dem Reaktionsprodukt eines Polyisocyanat-Addukts basiert und eine NCO-Funktionalität von 2,5 bis 6 und einen NCO-Gehalt von 10 bis 25 Gew.-%, bezogen auf das Gewicht des Polyisocyanats, hat und 2 bis 15 Gew.-%, bezogen auf das Gewicht des Polyisocyanats, Ethylenoxid-Einheiten, eingebaut in endständigen und/oder seitenständigen Polyether-Ketten, enthält.

6. Beschichtungsmasse nach Anspruch 5, worin das Polyisocyanat-Addukt aliphatisch und/oder cycloaliphatisch gebundene Isocyanat-Gruppen aufweist.

7. Beschichtungsmasse nach Anspruch 5, worin das Polyisocyanat Isocyanurat-Gruppen enthält und aus 1,6-Hexamethylendiisocyanat hergestellt ist.

8. Beschichtung, hergestellt aus einer wäßrigen Zwei-Komponenten-Polyurethan-Beschichtungsmasse, die bei Umgebungstemperatur ausgehärtet werden kann und die
   I) eine erste Komponente auf der Basis eines wäßrigdispergierten Polyurethans, worin das Polyurethan
      a) eine mittlere Hydroxy-Funktionalität von wenigstens 1,8,
      b) einen Gesamt-Gehalt an Urethan- und Harnstoff-Gruppen, berechnet als -NH-CO- (Molekulargewicht = 43), von 9 bis 20 Gew.-%, bezogen auf das Gewicht des Polyurethans,
      c) 0 bis 200 Milliäquivalente chemisch eingebauter, anionischer Gruppen auf 100 g Polyurethan und
      d) 0 bis 25 Gew.-%, bezogen auf das Gewicht des Polyurethans, Ethylenoxid-Einheiten, eingebaut in endständigen oder seitenständigen Polyether-Ketten
   
   aufweist, wobei die Komponenten c) und d) in einer Menge anwesend sind, die ausreicht, um das Polyurethan stabil in Wasser dispergiert zu halten,
   II) eine zweite Komponente auf der Basis eines in Wasser dispergierbaren Polyisocyanats, worin das Polyisocyanat
      a) einen Isocyanat-Gehalt von 2 bis 30 Gew.-%, bezogen auf das Gewicht des Polyisocyanats,
      b) eine mittlere Funktionalität von wenigstens 1,8,
      c) 0 bis 200 Milliäquivalente chemisch eingebauter, anionischer Gruppen auf 100 g Polyisocyanat und
      d) 0 bis 25 Gew.-%, bezogen auf das Gewicht des Polyioscyanats, Ethylenoxid-Einheiten, eingebaut in endständigen oder seitenständigen Polyether-Ketten
   
   aufweist, wobei die Komponenten c) und d) in einer Menge anwesend sind, die ausreicht, um das Polyisocyanat stabil in Wasser dispergiert zu halten, und worin die Komponenten I und II in einer Menge vorliegen, die ausreicht, ein Äquivalent-Verhältnis der Isocyanat-Gruppen zu den Hydroxyl-Gruppen von 0,8 : 1 bis 6 : 1 bereitzustellen und
   III) gegebenenfalls bis zu 20 Gew.-%, bezogen auf das Gewicht der Komponenten I und II, eines Polyols, das ein Molekulargewicht von 62 bis 1 000 hat und Ether-Gruppen enthalten kann,

   umfaßt.

## Revendications

1. Composition de revêtement aqueuse de polyuréthanne à deux composants qui peut être durcie à la température ambiante et qui contient:
   I) un premier composant à base d'un polyuréthanne dispersé dans l'eau dans lequel le polyuréthanne possède
      a) une fonctionnalité hydroxy moyenne d'au moins 1,8,
      b) une teneur totale en groupes uréthanne et urée, calculée en -NH-CO- (masse moléculaire = 43), de 9 à 20 % en poids, par rapport au poids du polyuréthanne,
      c) 0 à 200 milliéquivalents de groupes anioniques incorporés chimiquement pour 100 g de polyuréthanne et
      d) 0 à 25% en poids, par rapport au poids du polyuréthanne, de motifs oxyde d'éthylène incorporés dans des chaînes polyéther terminales et/ou latérales,
   
   dans lequel les composants c) et d) sont présents en une quantité qui est suffisante pour maintenir le polyuréthanne en dispersion stable dans l'eau,
   II) un second composant à base d'un polyisocyanate dispersible dans l'eau dans lequel le polyisocyanate possède
      a) une teneur en isocyanate de 2 à 30% en poids, par rapport au poids du polyisocyanate,
      b) une fonctionnalité moyenne d'au moins 1,8,

c) 0 à 200 milliéquivalents de groupes anioniques incorporés chimiquement pour 100 g de polyisocyanate et

d) 0 à 25% en poids, par rapport au poids du polyisocyanate, de motifs oxyde d'éthylène incorporés dans des chaînes polyéther terminales et/ou latérales,

dans lequel les composants c) et d) sont présents en une quantité qui est suffisante pour maintenir le polyisocyanate en dispersion stable dans l'eau, et les composants I et II sont présents en une quantité suffisante pour fournir un rapport d'équivalents des groupes isocyanate aux groupes hydroxyle de 0,8:1 à 6:1, et

III) éventuellement jusqu'à 20 % en poids, par rapport au poids des composants I et II, d'un polyol qui possède une masse moléculaire de 62 à 1000 et qui peut contenir des groupes éther.

**2.** Composition de revêtement selon la revendication 1, dans laquelle ledit polyuréthanne dispersé dans l'eau possède une masse en équivalent hydroxy de 100 à 5000.

**3.** Composition de revêtement selon la revendication 1, dans laquelle ledit polyuréthanne dispersé dans l'eau possède une masse en équivalent hydroxy de 1000 à 3000, une fonctionnalité moyenne de 2 à 6 et 10 à 180 milliéquivalents de groupes anioniques incorporés chimiquement pour 100 g de polyuréthanne.

**4.** Composition de revêtement selon les revendications 1 à 3, dans laquelle ledit polyol possède une masse moléculaire de 62 à 250 et peut contenir des groupes éther.

**5.** Composition de revêtement selon les revendications 1 à 4, dans laquelle ledit polyisocyanate dispersé dans l'eau est à base du produit de réaction d'un produit d'addition de polyisocyanate, et possède une fonctionnalité NCO de 2,5 à 6, une teneur en NCO de 10 à 25% en poids, par rapport au poids dudit polyisocyanate et contient 2 à 15% en poids, par rapport au poids dudit polyisocyanate, de motifs oxyde d'éthylène incorporés dans des chaînes polyéther terminales et/ou latérales.

**6.** Composition de revêtement selon la revendication 5, dans laquelle ledit produit d'addition de polyisocyanate possède des groupes isocyanate liés aliphatiquement et/ou cycloaliphatiquement.

**7.** Composition de revêtement selon la revendication 5, dans laquelle ledit polyisocyanate contient des groupes isocyanurate et est préparé à partir du diisocyanate de 1,6 hexaméthylène.

**8.** Revêtement qui est préparé à partir d'une composition aqueuse de revêtement de polyuréthanne à deux composants que l'on peut durcir à la température ambiante et qui contient:

I) un premier composant à base d'un polyuréthanne dispersé dans l'eau dans lequel le polyuréthanne possède

a) une fonctionnalité hydroxy moyenne d'au moins 1,8,

b) une teneur totale de groupes uréthanne et urée, calculée en -NH-CO- (masse moléculaire = 43), de 9 à 20 % en poids, par rapport au poids du polyuréthanne,

c) 0 à 200 milliéquivalents de groupes anioniques incorporés chimiquement pour 100 g de polyuréthanne et

d) 0 à 25% en poids, par rapport au poids du polyuréthanne, de motifs oxyde d'éthylène incorporés dans des chaînes polyéther terminales et/ou latérales,

dans lequel les composants c) et d) sont présents en une quantité qui est suffisante pour maintenir le polyuréthanne en dispersion stable dans l'eau,

II) un second composant à base d'un polyisocyanate dispersible dans l'eau dans lequel le polyisocyanate possède

a) une teneur en isocyanate de 2 à 30% en poids, par rapport au poids du polyisocyanate,

b) une fonctionnalité moyenne d'au moins 1,8,

c) 0 à 200 milliéquivalents de groupes anioniques incorporés chimiquement pour 100 g de polyisocyanate, et

d) 0 à 25% en poids, par rapport au poids du polyisocyanate, de motifs oxyde d'éthylène incorporés dans des chaînes polyéther terminales et/ou latérales,

dans lequel les composants c) et d) sont présents en une quantité qui est suffisante pour maintenir le polyisocyanate en dispersion stable dans l'eau, et les composants I et II sont présents en une quantité suffisante pour fournir un rapport d'équivalents des groupes isocyanate aux groupes hydroxyle de 0,8:1 à 6:1, et

III) éventuellement jusqu'à 20 % en poids, par rapport au poids des composants I et II, d'un polyol qui possède une masse moléculaire de 62 à 1000 et qui peut contenir des groupes éther.